Europäisches Patentamt

European Patent Office

Office européen des brevets

(11) Veröffentlichungsnummer: **0 294 589 B1**

## (12) EUROPÄISCHE PATENTSCHRIFT

(45) Veröffentlichungstag der Patentschrift: **02.12.92**

(21) Anmeldenummer: **88107211.0**

(22) Anmeldetag: **05.05.88**

(51) Int. Cl.⁵: **F21M  3/18**, F21M 3/14

---

(54) **Abblendlichtscheinwerfer.**

---

(30) Priorität: **12.06.87 DE 3719638**

(43) Veröffentlichungstag der Anmeldung:
**14.12.88 Patentblatt  88/50**

(45) Bekanntmachung des Hinweises auf die
Patenterteilung:
**02.12.92 Patentblatt  92/49**

(84) Benannte Vertragsstaaten:
**DE FR NL SE**

(56) Entgegenhaltungen:
DE-A- 3 528 820      DE-B- 1 817 327
DE-C- 754 363       DE-C- 1 196 598
FR-A- 1 447 595      GB-A- 103 498
GB-A- 411 574       US-A- 724 271
US-A- 2 562 258      US-A- 2 753 487

(73) Patentinhaber: **ROBERT BOSCH GMBH**
**Postfach 30 02 20**
**W-7000 Stuttgart 30(DE)**

(72) Erfinder: **Lindae, Gerhard, Dipl.-Ing.**
**Im Brühl 23**
**W-7250 Leonberg(DE)**
Erfinder: **Wörner, Bernhard, Dipl.-Ing.**
**Mörikestrasse 58**
**W-7000 Stuttgart 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft einen Abblendlichtscheinwerfer nach der Gattung des Anspruchs 1. Aus DE-OS 35 28 820 ist ein solcher Scheinwerfer bekannt, bei dem zwischen dem Reflektor und der Blende eine verschiebbare Zusatzblende angeordnet ist. Bei Scheinwerfern dieser Art ist nur die gesamte Zusatzblende verschiebbar und damit wird die Hell-Dunkel-Grenze im Sinne größerer Reichweite des Lichtbündels verändert.

Ein solcher Scheinwerfer ist nicht geeignet, die eigene Fahrbahnseite mit größerer Reichweite auszuleuchten, ohne einen Fahrzeuglenker zu blenden.

Mit der Erfindung wird erreicht, daß zusätzliches Licht für die Ausleuchtung der eigenen Fahrbahnseite zur Verfügung steht und keine Blendung des Gegenverkehrs erfolgt.

Vorteilhafte Weiterbildungen der Erfindung sind in den abhängigen Ansprüchen beschrieben. Mit Anspruch 2 wird ein Weg gewiesen, den Abblendlichtscheinwerfer als herkömmlichen Scheinwerfer zu betreiben. Anspruch 3 offenbart eine Einrichtung, mit der eine weitere Ausleuchtung der eigenen Fahrbahn erreicht wird und die eine optimale Einstellung der Reichweite des Abblendlichts ermöglicht.

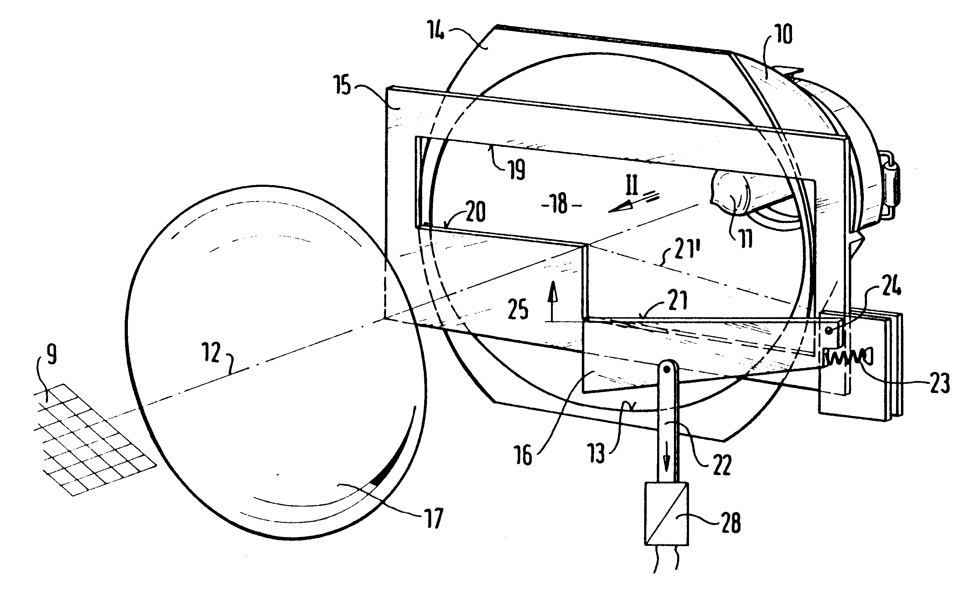

Ein Ausführungsbeispiel der Erfindung ist in der Zeichnung dargestellt und in der Figurenbeschreibung näher erläutert. Die Figur zeigt einen Abblendlichtscheinwerfer mit den wesentlichen Teilen in raumbildlicher Darstellung.

Ein Scheinwerfer für Abblendlicht von Kraftfahrzeugen hat einen Reflektor 10, dessen Meridianschnitte Kurven höherer Ordnung sind, mit einer im Bereich des Brennpunktes angeordneten Lichtquelle 11, die sich annähernd auf der optischen Achse 12 des Scheinwerfers befindet une eine Glühwendel einer Glühlampe ist. Ein Flansch 14 bildet mit dem Reflektor 10 dessen Austrittsöffnung 13. Abschnittsweise ist die Horizontalebene 9 angedeutet.

Vor dem Reflektor 10 in Richtung der reflektierten Strahlen gemäß Pfeil II sind im wesentlichen rechtwinklig zur optischen Achse 12 angeordnet: Eine Blende 15 und unmittelbar an diese eine Zusatzblende 16 und davor ein Objektiv 17.

Die im Strahlenbündel des Reflektors angeordnete Blende 15 hat einen Durchbruch 18 mit einer oberen optisch wirksamen Kante 19 und einer unteren optisch wirksamen Kante 20; diese erstreckt sich in Pfeilrichtung II gesehen nur rechts von der optischen Achse 12 und ist wie die Oberkante 19 im wesentlichen horizontal ausgerichtet. Die vertikale Ausdehnung des Durchbruchs 18 auf der einen Seite, z.B. links der optischen Achse 12 ist größer als auf der anderen Seite.

Vor der größeren Ausdehnung des Durchbruchs 18 links der optischen Achse 12 ist unmittelbar vor der Blende 15 die Zusatzblende 16 angeordnet. Diese ist an der linken Blendenseite um die Schwenkachse 24 schwenkbar angeordnet, so daß die optisch wirksame Kante 21 der Zusatzblende 16 die Durchbruchsöffnung der Blende 15 fast vollkommen freigibt. Die optisch wirksame Kante 20 und die optisch wirksame Kante 21 bilden die Hell-Dunkel-Grenze des Abblendlichtes. Derartige Scheinwerfer, deren Reflektoren keine Rotationskörper sind, bilden die vorbestimmte Lichtverteilung auf der Fahrbahn im wesentlichen-- jedoch seiten- und höhenverkehrt - durch den Reflektor 10, so daß durch das Objektiv insbesondere die Seiten- und Höhenumkehrung sowie die Auffächerung des Lichtbündels erfolgt.

Die dargestellte Anordnung bildet eine Lichtverteilung auf der Fahrbahn, bei der die eigene Fahrbahnseite wesentlich besser ausgeleuchtet wird als bei herkömmlichem Abblendlicht, weil die Zusatzblende mittels eines mechanischen, elektrischen oder hydraulischen Antriebelements 28 über die Verbindung 22 gegen die Kraft einer Rückstellfeder 23 angesteuert ist.

Dargestellt ist der Scheinwerfer mit Zusatzblende 16, bei der die Zusatzblende 16 mittels des Antriebselements 28 entgegen der Kraft der Rückstellfeder 23 nach unten gezogen wird. In diesem Funktionszustand ergibt sich eine weite Ausleuchtung der eigenen Fahrbahn.

Zieht das Antriebselement 28 nicht an, ist also in funktionslosem Zustand, so wird die Zusatzblende 16 durch die Kraft der Rückstellfeder 23 nach oben gedrückt, so daß die Hell-Dunkel-Grenze durch die optisch wirksame Kante 20 der Blende 15 und die optisch wirksame Kante 21′ der Zusatzblende 16 gebildet wird.

Zusätzlich zur Steuerung der Zusatzblende 16 kann eine Veränderung der Lichtverteilung des vom Scheinwerfer abgegebenen Lichts vorgenommen werden. Dabei wird die Richtung der höchsten Lichtintensität verändert durch Verschieben der Glühlampe oder des Reflektors oder Bewegen eines zusätzlichen optischen Glieds im Strahlengang, wie z.B. einer in Blendennähe angebrachten Glasplatte oder Linse.

## Patentansprüche

1. Abblendlichtscheinwerfer für Kraftfahrzeuge mit einem Reflektor (10) und mit einer im Bereich des Reflektorbrennpunktes angeordneten Lichtquelle (11) und mit einer vor dem Reflektor (10) angeordneten Blende (15), deren optisch wirksame Kanten die Hell-Dunkel-Grenze des Lichtbündels bilden, das auf der einen Seite der eigenen Fahrbahn ein weiter ausleuchtendes und auf der anderen Seite der Gegenfahrbahn ein weniger weit die Fahrbahn ausleuchtendes Lichtbündel ist, und mit einem abbildenden Objektiv vor der Blende und mit einer im Bereich der Blende (15) verstellbaren Zusatzblende (16), dadurch gekennzeichnet, daß die Blende (15) auf der einen Seite die verstellbare, seitlich angeordnete Zusatzblende (16) aufweist.

2. Scheinwerfer nach Anspruch 1, dadurch gekennzeichnet, daß die Blende (15) in der einen Endstellung der Zusatzblende (16) optisch wirksame Kanten (20, 21') hat, die eine Ausleuchtung nach Art eines asymmetrischen Abblendlichts erzeugen.

3. Scheinwerfer nach Anspruch 2, dadurch gekennzeichnet, daß die Zusatzblende (16) um eine Schwenkachse (24) schwenkbar ist und von einem an die Zusatzblende (16) angelenkten mechanischen, elektrischen oder hydraulischen Antriebselement (28) steuerbar ist.

4. Scheinwerfer nach Anspruch 3, dadurch gekennzeichnet, daß die Zusatzblende (16) gegen die Kraft einer Rückstellfeder (23) schwenkbar ist.

## Claims

1. Dipped beam headlamp for motor vehicles, with a reflector (10) and with a light source in the area of the reflector's focal point (11) and with a shade (15) attached in front of the reflector (10), the optically effective edges of which shade form the light/dark boundary of the light beam which illuminates over a great distance on one side of the vehicle's own lane and less far on the other side of the opposite lane, and with a projecting lens in front of the shade and with an adjustable additional shade (16) in the area of the shade (15), characterised in that on one side the shade (15) has the adjustable, laterally disposed additional shade (16).

2. Headlamp according to Claim 1, characterised in that the shade (15) has optically effective edges (20, 21) in one end position of the additional shade (16), which edges produce an illumination in the manner of an asymmetrical dipped beam.

3. Headlamp according to Claim 2, characterised in that the additional shade (16) can be swivelled through a swivelling axis (24) and can be controlled by a mechanical, electrical or hydraulic driving element (28) articulated on the additional shade (16).

4. Headlamp according to Claim 3, characterised in that the additional shade (16) can be swivelled against the force of a pull-back spring (23).

## Revendications

1. Phare-code pour véhicules automobiles comportant un réflecteur (10) avec une source lumineuse (11) placée au niveau du foyer du réflecteur et un diaphragme (15) placé devant le réflecteur (10), et dont les arêtes optiques forment la frontière entre la zone claire et la zone sombre du faisceau lumineux, et assurant d'un côté de sa propre voie de circulation, un éclairage plus long et de l'autre côté sur la voie de circulation opposée, un faisceau lumineux éclairant moins loin la voie de circulation, ainsi qu'une optique placée devant le diaphragme et un diaphragme complémentaire (16) réglable, placé au niveau du diaphragme (15), caractérisé en ce que le diaphragme (15) comporte d'un côté le diaphragme complémentaire (16), réglable, monté latéralement.

2. Phare-code selon la revendication 1, caractérisé en ce que le diaphragme (15) possède dans l'une des positions d'extrémité du diaphragme complémentaire (16), des arêtes optiques (20, 21') qui créent un éclairage correspondant à un code asymétrique.

3. Phare-code selon la revendication 2, caractérisé en ce que le diaphragme complémentaire (16) est pivotant autour d'un axe de pivotement (24) et est commandé à partir d'un moyen d'entraînement (28) mécanique, électrique ou hydraulique articulé sur le diaphragme complémentaire (16).

4. Phare-code selon la revendication 3, caractérisé en ce que le diaphragme complémentaire (16) peut pivoter contre la force développée par un ressort de rappel (23).